# EUROPEAN PATENT SPECIFICATION

(11) **EP 4 432 442 B1**
(45) Date of publication and mention of the grant of the patent: **21.01.2026**
(21) Application number: 23873099.8
(22) Date of filing: 26.09.2023
(51) Int. Cl.: H01M 10/613, H01M 50/209, H01M 50/211, H01M 50/271, H01M 50/213, H01M 50/24

(54) **BATTERY MODULE**
BATTERIEMODUL
MODULE DE BATTERIE

(30) Priority: 27.09.2022 KR 20220122411
(43) Date of publication of application: 18.09.2024
(73) Proprietor: LG Energy Solution, Ltd., Seoul 07335 (KR)
(72) Inventor: JEON, Byeong Jun, Daejeon 34122 (KR); AN, Ji Myong, Daejeon 34122 (KR); SON, Young Su, Daejeon 34122 (KR)
(74) Representative: Plasseraud IP
(86) International application number: PCT/KR2023/014808
(87) International publication number: WO 2024/071985

(56) References cited:
- CN-A- 114 944 533
- KR-A- 20220 060 919
- KR-A- 20220 060 919
- KR-A- 20220 120 492
- US-A1- 2012 003 508
- US-A1- 2014 377 623

## Description

### Technical Field

The present invention relates to a battery module, particularly, relates to a battery module for preventing chain ignition, and specifically, relates to a battery module for preventing chain ignition in which a firewall part provided to integrally surround outer peripheral surfaces of a plurality of battery cells can prevent spread of fire.

This application claims the benefit of priority based on Korean Patent Application No. 10-2022-0122411 dated September 27, 2022.

### Background Art

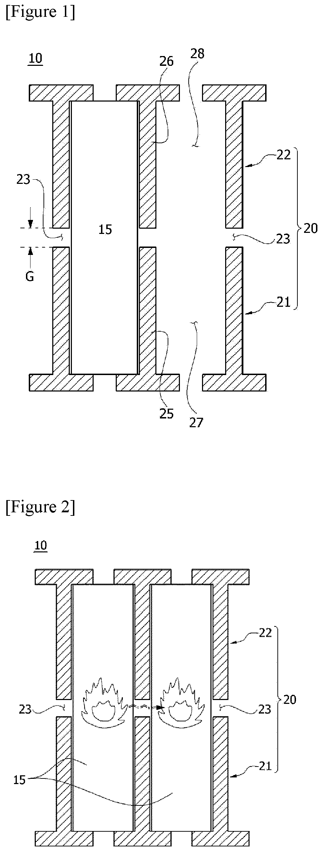

Figures 1 and 2 are diagrams for explaining a structure of a conventional battery module.

Referring to Figure 1, a conventional battery module (10) comprises a lower frame (21), an upper frame (22), and a plurality of battery cells (15).

The lower frame (21) and the upper frame (22) are assembled up and down to form one cell frame (20).

The lower frame (21) is provided with a lower partition wall (25) partitioning an internal space (27) of the lower frame (21) so that one battery cell (15) is insertable. The upper frame (22) has the same structure as the lower frame (21), and is provided with an upper partition wall (26) provided to face the lower partition wall (25).

Each battery cell (15) is inserted into the internal space (27) of the lower frame (21). Next, the upper frame (22) is coupled to the top of the lower frame (21) to cover each battery cell (15).

It is difficult to manufacture the cell frame (20) with a height corresponding to the height of the battery cell (15) through the existing injection process. Accordingly, the cell frame (20) is manufactured separately into two parts of the lower frame (21) and the upper frame (22), which are assembled up and down.

Unless the cell frame (20) is manufactured as a single component, a gap (23) in the cell frame (20) is formed at a joint site between the lower frame (21) and the upper frame (22). Such a gap (23) also exists between the lower partition wall (25) and the upper partition wall (26) disposed to face each other.

The gap (23) has a very narrow interval (G). Even in the case of the very narrow interval (G), if the gap (23) exists, the internal space of the cell frame is connected to enable fluid movement through the gap (23).

If one battery cell (15) of the plurality of battery cells provided in the battery module (10) ignites, the flame may quickly spread from the ignited battery cell (15) to surrounding battery cells through the gap (23).

Generally, the battery cell (15) generates heat upon charging. If the heat generated upon charging or use of the battery cell (15) is not efficiently removed, the battery cell (15) may ignite due to heat accumulation in the battery cell (15).

An example of a secondary battery module comprising a plurality of secondary battery cells having waterproof structure can be found in KR 2022-0060919 A.

### Disclosure

### Technical Problem

The present invention is intended to provide a battery module having an integrated cell frame having a vertically symmetrical structure in the longitudinal direction of the battery cell, without constructing a cell frame as a conventional assembly of an upper frame and a lower frame.

In addition, the present invention is intended to provide a battery module capable of preventing spread of fire between adjacent battery cells by manufacturing a cell frame as a one-piece, and filling a firewall part provided to surround the outer peripheral surfaces of the battery cells in the entire inner region of the cell frame.

### Technical Solution

To solve the above-described problem, a battery module according to one example of the present invention is defined in claim 1.

Furthermore, in the cell frame, the cell insertion space may be divided up and down by the support rib, and the upper space of the cell insertion space, which is the top of the support rib, and the lower space of the cell insertion space, which is the bottom of the support rib, may be connected to each other to enable fluid movement.

Also, the cell frame may have a shape that the upper space and the lower space are symmetrical to each other based on the support rib.

In addition, the firewall part may comprise a potting resin, in which it is injected into the cell insertion space and cured to be in a state of surrounding the respective battery cells.

Furthermore, the potting resin may be injected into the entire region of the cell insertion space.

Also, the potting resin may comprise any one of a silicone-based resin, a urethane-based resin, or an epoxy-based resin.

In addition, the firewall part may contact the inner surface of the cell insertion space and the outer peripheral surface of each battery cell, respectively, and may be disposed to divide adjacent battery cells.

Furthermore, the firewall part may be provided so that the width between the inner surface of the cell frame and the battery cell closest to the cell frame becomes narrower as it goes from the upper end of the firewall part to the central portion along the insertion direction of the battery cell, and may be provided so that it becomes wider as it goes from the central portion of the firewall part to the lower end of the firewall part.

Also, the support rib may have a plurality of rib holes into which the respective battery cells are inserted.

In addition, the support rib may be formed integrally with the cell frame.

Furthermore, the support rib may be disposed to be spaced apart along the peripheries of the rib holes, and may comprise a plurality of support protrusions provided to support the side surfaces of the battery cells inserted into the rib holes.

Also, the support protrusion may be formed to protrude from at least one of the top or the bottom of the support rib.

The battery module may further comprise a support pillar passing through the support rib up and down, disposed in parallel with the battery cell, and coupled to the support rib.

In addition, the battery module may further comprise an upper cover mounted on the top of the support pillar and coupled to the cell frame to cover the open top of the cell frame, and a lower cover mounted on the bottom of the support pillar and coupled to the cell frame to cover the open bottom of the cell frame.

### Advantageous Effects

As discussed above, the battery module related to one example of the present invention has the following effects.

Unlike a conventional cell frame composed of an assembly of an upper frame and a lower frame, in the present invention, the cell frame is manufactured as an integrated type in the insertion direction of the battery cell (or 'cell frame height direction').

Also, it can be manufactured as a one-piece having a vertically symmetrical structure based on the central portion of the cell frame, and the firewall part filled in the inner side space of the cell frame to surround the respective battery cells can prevent spread of fire between the battery cells.

In addition, due to a structural feature of the integrally formed cell frame, the thickness of the cell frame is provided to become smaller as it goes from the center of the cell frame toward the upper end and the lower end, whereby the firewall part can be formed to have a thicker thickness, and as a result, it is possible to effectively prevent spread of fire between the battery cells.

The conventional battery module has a structure in which the upper and lower frames constituting the cell frame are coupled up and down, and thus after assembling, a gap is created between the upper and lower frames, whereas the present invention can integrally form the firewall part by inserting a plurality of battery cells into the integrated cell frame, and then injecting a flame-retardant material into the cell insertion space of the cell frame to be cured.

### Description of Drawings

Figures 1 and 2 are diagrams for explaining a structure of a conventional battery module.
Figure 3 schematically shows a cross-sectional diagram of a battery module according to one example of the present invention.
Figure 4 schematically shows a perspective diagram of a cell frame according to one example of the present invention.
Figure 5 schematically shows a cross-sectional diagram of a cell frame according to one example of the present invention.
Figure 6 is a diagram for explaining a process of inserting a battery cell into a cell insertion space of a cell frame according to one example of the present invention.
Figure 7 is a diagram for explaining a state where battery cells are inserted into a cell frame according to one example of the present invention.
Figure 8 is a diagram for explaining a structure of a firewall part provided in a cell insertion space of a cell frame, in one example of the present invention.
Figure 9 is a diagram for explaining a process in which a upper cover and a lower cover are coupled to a cell frame in one example of the present invention.

### Best Mode

Hereinafter, a battery module according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

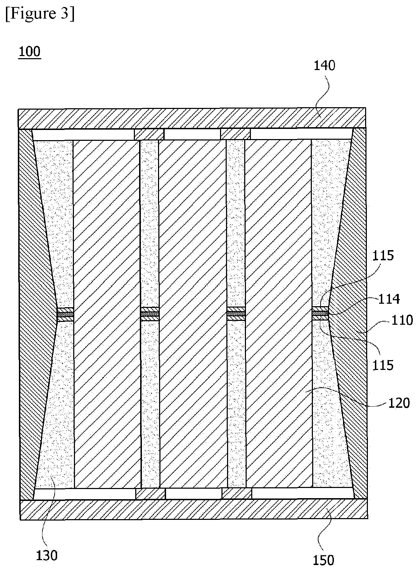

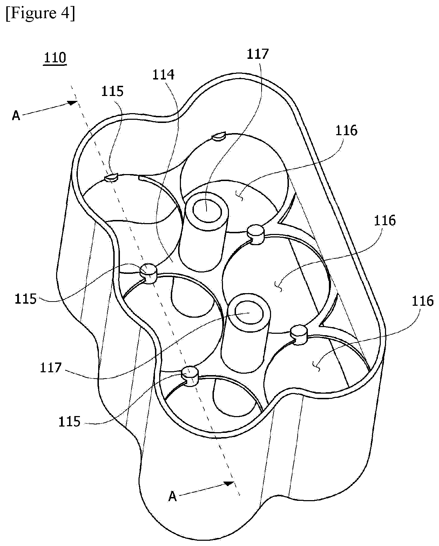

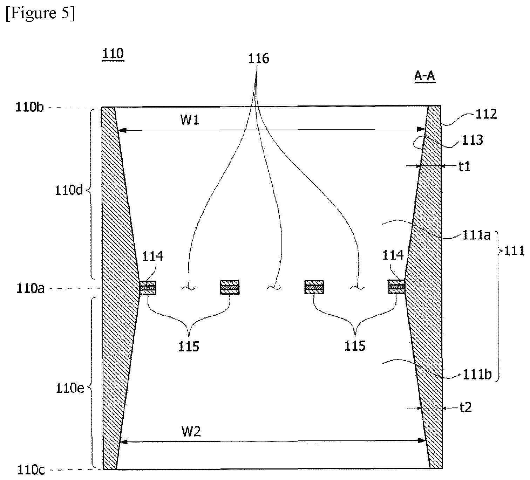

Figure 3 schematically shows a cross-sectional diagram of a battery module (100) according to one example of the present invention, Figure 4 schematically shows a perspective diagram of a cell frame according to one example of the present invention, and Figure 5 schematically shows a cross-sectional diagram of a cell frame according to one example of the present invention.

Referring to Figure 3, the battery module (100) according to one example of the present invention comprises a cell frame (110), a plurality of battery cells (120), and a firewall part (130).

In addition, each battery cell (120) may be a cylindrical battery.

Specifically, the battery module (100) according to one example of the present invention comprises a plurality of battery cells (120), a cell frame (110) provided with a cell insertion space (111) into which the respective battery cells (120) are inserted, and a support rib (114) dividing the cell insertion space (111) and supporting the respective battery cells (120), and a firewall part (130) provided in the cell insertion space (111) and provided to surround the respective battery cells.

Referring to Figures 4 and 5, the cell frame (110) is a case for accommodating a plurality of battery cells (120). The cell frame (110) is provided with a cell insertion space (111) and a support rib (114). The cell insertion space (111) is a space where the plurality of battery cells (120) is inserted.

In the cell frame (110), the top and the bottom may each be opened.

In the cell frame (110), the cell insertion space (111) is divided up and down by the support rib (114). In this instance, the upper space (111a) of the cell insertion space (111), which is the top of the support rib (114), and the lower space (111b) of the cell insertion space

(111), which is the bottom of the support rib (114), may be connected to each other to enable fluid movement. In addition, the upper space (111a) and the lower space (111b) may be provided to be vertically symmetrical based on the support rib (114).

For example, the cell frame (110) may have a shape that the upper space (111a) and the lower space (111b) are symmetrical to each other based on the support rib (114). In addition, the support rib (114) may be formed integrally with the cell frame (110).

In Figure 3, the x-axis direction represents the arrangement direction of the plurality of battery cells (120) disposed in the cell frame (110) or the radial direction of the battery cells (120). Then, the y-axis direction represents the insertion direction of the battery cells (120) or the height direction of the cell frame (110).

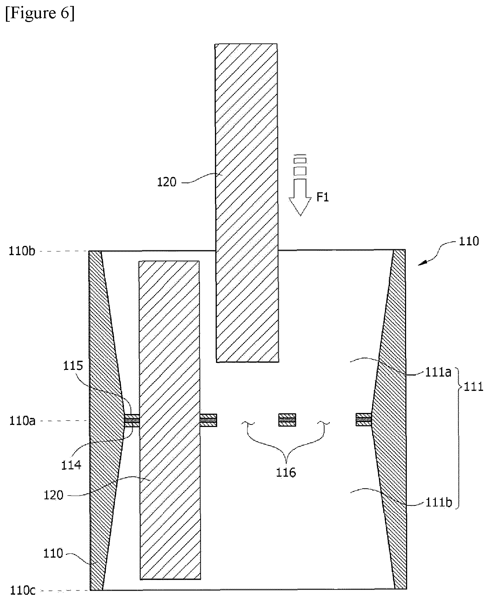

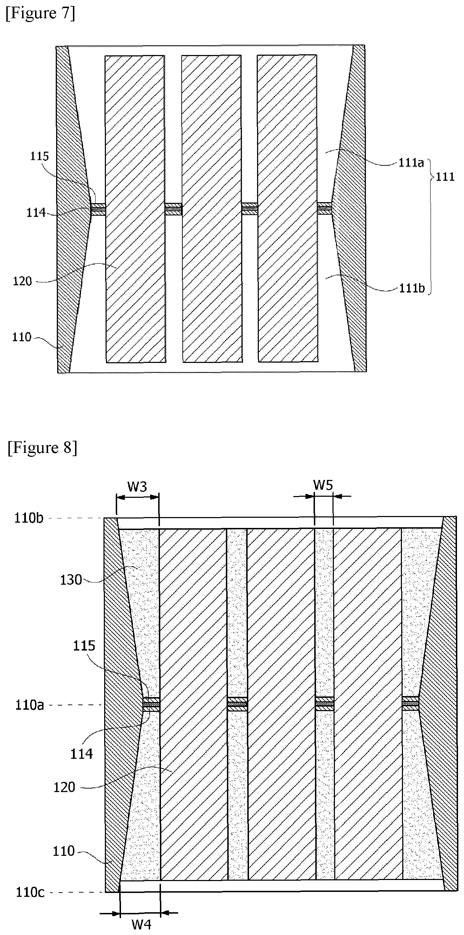

Figure 6 is a diagram for explaining a process of inserting a battery cell into a cell insertion space of a cell frame according to one example of the present invention, and Figure 7 is a diagram for explaining a state where battery cells are inserted into a cell frame according to one example of the present invention.

The cell frame (110) may be formed integrally along the height direction. As the cell frame (110) is manufactured as a one-piece, it may be provided so that its thickness (t1) becomes thicker as it goes from the upper end (110b) of the cell frame (110) to the central portion (110a) of the cell frame (100), and may be provided so that its thickness (t2) becomes narrower as it goes from the central portion (110a) to the lower end (110c) of the cell frame, along the insertion direction (F1, see Figure 6) of the battery cell (120).

Referring to Figures 5 and 6, the cell frame (110) is provided so that the width (W1) of the cell insertion space (111) of the cell frame (110) becomes narrower as it goes from the upper end (110b) of the cell frame (110) to the central portion (110a) of the cell frame (110), along the insertion direction (F1) of the battery cell.

That is, the cell frame (110) is provided so that the width (W1) of the upper region (111a) of the cell insertion space (111) becomes narrower as it goes from the upper end (110b) of the cell frame (110) to the central portion (110a) of the cell frame (110).

Also, the upper end portion (110d) of the cell frame (110) is provided so that its thickness (t1) becomes thicker as it goes from the upper end (110b) of the cell frame (110) to the central portion (110a) of the cell frame (100), along the insertion direction (F1) of the battery cell. The thickness (t1) is the gap between the outer surface (112) and the inner surface (113) of the cell frame (110) in the upper end portion (110d) of the cell frame (110).

In addition, the upper end portion (110d) of the cell frame (110) may be provided so that its thickness (t1) becomes thicker at least in part as it goes from the upper end (110b) of the cell frame (110) to the central portion (110a) of the cell frame (100), along the insertion direction (F1) of the battery cell.

Furthermore, the upper end portion (110d) of the cell frame (110) may be provided so that its thickness (t1) becomes thicker continuously as it goes from the upper end (110b) of the cell frame (110) to the central portion (110a) of the cell frame (100), along the insertion direction (F1) of the battery cell.

In addition, the upper end portion (110d) of the cell frame (110) may be provided so that its thickness (t1) becomes thicker linearly as it goes from the upper end (110b) of the cell frame (110) to the central portion (110a) of the cell frame (100), along the insertion direction (F1) of the battery cell.

Here, the upper end portion (110d) of the cell frame refers to the portion where the upper space (111a) is provided. Also, the upper space (111a) may have an approximately inverted trapezoidal cross-section.

In addition, the cell frame (110) may have a shape that the upper space (111a) and the lower space (111b) are symmetrical to each other based on the support rib (114).

The cell frame (110) is provided so that the width (W2) of the cell insertion space (111) becomes wider as it goes from the central portion (110a) of the cell frame (110) to the lower end (110c) of the cell frame (110), along the insertion direction (F1) of the battery cell.

That is, the cell frame (110) is provided so that the width (W2) of the lower region (111b) of the cell insertion space (111) becomes wider as it goes from the central portion (110a) of the cell frame (110) to the lower end (110c) of the cell frame (110), along the insertion direction (F1) of the battery cell.

The lower end portion (110e) of the cell frame is provided so that its thickness (t2) becomes smaller as it goes from the central portion (110a) to the lower end (110c) of the cell frame, along the insertion direction (F1) of the battery cell. The thickness (t2) is the gap between the outer surface (112) and the inner surface (113) of the cell frame (110) in the lower end portion (110e) of the cell frame (110).

Also, the lower end portion (110e) of the cell frame is provided so that its thickness (t2) becomes smaller at least in part as it goes from the central portion (110a) to the lower end (110c) of the cell frame, along the insertion direction (F1) of the battery cell.

In addition, the lower end portion (110e) of the cell frame may be provided so that its thickness (t2) becomes smaller continuously as it goes from the central portion (110a) to the lower end (110c) of the cell frame, along the insertion direction (F1) of the battery cell.

Furthermore, the lower end portion (110e) of the cell frame may be provided so that its thickness (t2) becomes smaller linearly as it goes from the central portion (110a) to the lower end (110c) of the cell frame, along the insertion direction (F1) of the battery cell.

Here, the lower end portion (110e) of the cell frame (110) refers to the portion where the lower space (111b) is provided. In addition, the lower space (111b) may have a trapezoidal cross-section.

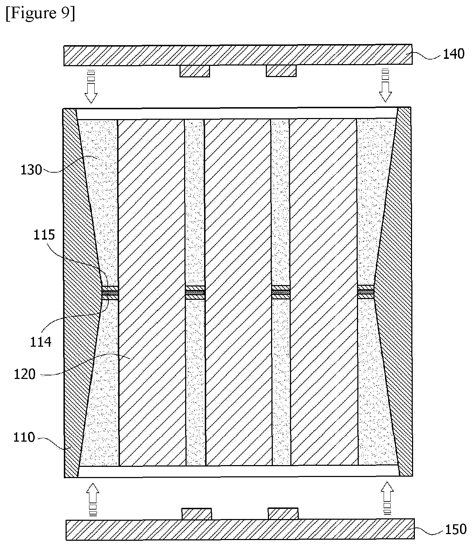

Figure 8 is a diagram for explaining a structure of a firewall part provided in a cell insertion space of a cell frame, in one example of the present invention, and Figure 9 is a diagram for explaining a process in which a upper cover and a lower cover are coupled to a cell frame in one example of the present invention.

The firewall part (130) may comprise a potting resin, in which it is injected into the cell insertion space (111) and cured to be in a state of surrounding the respective battery cells.

Also, the firewall part (130) may be formed of a flame-retardant material having flame retardancy. The firewall part (130) is provided to surround the inner surface of the cell insertion space (111) and the outer peripheral surface of each battery cell (120).

In addition, the firewall part (130) contacts the inner surface of the cell insertion space (111) and the outer peripheral surface of each battery cell (120), and is disposed to divide adjacent battery cells (120). That is, the firewall part (130) is formed by being filled in the space between adjacent battery cells (120). In addition, the firewall part (130) is formed by being also filled in the space between the inner surface of the cell frame (110) and the battery cell (120) closest to the cell frame (110).

Furthermore, the firewall part (130) may be formed as the flame-retardant material is injected into the space between the battery cells (120) in the cell insertion space (111) and cured. In addition, the potting resin may be injected into the entire region of the cell insertion space (111).

In this document, the potting resin, in which silicone and a flame retardant are mixed, may be used as the flame-retardant material. In this example, the potting resin may comprise any one of a silicone-based resin, a urethane-based resin, or an epoxy-based resin.

The firewall part (130) contacts the inner surface of the cell insertion space (111) and the outer peripheral surface of each battery cell (120), and divides adjacent battery cells (120).

Referring to Figure 8, in the upper space (111a), the firewall part (130) is provided so that the width (W3) between the inner surface of the cell frame (110) and the battery cell (120) adjacent to the cell frame (110) becomes narrower as it goes from the upper end (110b) of the cell frame (110) to the central portion (110a).

That is, the firewall part (130) may be provided so that the width (W3) between the inner surface (surface forming the cell insertion space) of the cell frame (110) and the battery cell (120) closest to the cell frame (110) becomes narrower as it goes from the upper end (110b) of the cell frame (110) to the central portion (110a).

Also, the firewall part (130) may be provided so that the width (W4) between the inner surface (113, surface forming the cell insertion space) of the cell frame (110) and the battery cell (120) closest to the cell frame (110) increases as it goes from the central portion (110a) of the cell frame (110) to the lower end (110c) of the cell frame (110) along the insertion direction of the battery cell.

In addition, the firewall part (130) is also disposed in the space between two adjacent battery cells, where the firewall part (130) dividing two battery cells (120) adjacent to each other may be provided so that its thickness (W5) is approximately constant.

Referring to Figures4 and 5, the support rib (114) may have a plurality of rib holes (116) into which the respective battery cells (120) are inserted. In addition, each battery cell (120) is inserted into each rib hole (116).

The support rib (114) is formed integrally with the cell frame (110) to divide the cell insertion space (111) up and down. In addition, the support rib (114) integrally supports the respective battery cells (120) inserted into the cell insertion space (111).

Also, the support rib (114) may be disposed to be spaced apart along the peripheries of the rib holes (116), and may comprise a plurality of support protrusions (115) provided to support the side surfaces of the battery cells (120) inserted into the rib holes (116). As one example, the support protrusion (115) may be formed to protrude from at least one of the top or the bottom of the support rib (114). In addition, the support protrusion (115) may be formed integrally with the support rib (114).

In addition, the support rib (114) may be provided to surround the outer peripheral surface of the battery cell (120) at a predetermined width interval (W5), and two battery cells (120) adjacent to each other may be spaced apart by the width interval (W5). For example, adjacent rib holes (116) may be disposed to be spaced apart from each other to have a predetermined width interval (W5). Furthermore, the firewall part (130) is filled in the space between two adjacent battery cells.

Referring to Figures 4 and 5, the support rib (114) is provided in the cell frame (110) to divide the cell insertion space (111) up and down. The support rib (114) supports the side surfaces of the respective battery cells (120), and is provided so that the respective battery cells (120) are disposed to be spaced apart at regular intervals.

The respective battery cells (120) are inserted into the cell insertion space (111) by passing through the respective rib holes (116). The support protrusion (115) may contact the outer peripheral surface of the battery cell (120) to support the side surface of the battery cell (120).

The battery module (100) may comprise a support pillar (117) passing through the support rib (114) up and down, disposed in parallel with the battery cell (120), and coupled to the support rib (114).

The support pillar (117) is coupled to the support rib (114) by penetrating the support rib (114) up and down, is disposed in parallel with the battery cell (120), and supports the support rib (114).

The battery module (100) may comprise an upper cover (140) mounted on the top of the support pillar (117) and coupled to the cell frame (110) to cover the open top of the cell frame, and a lower cover (150) mounted on the bottom of the support pillar (117) and coupled to the cell frame to cover the open bottom of the cell frame (110).

As one example, the upper cover (140) and the lower cover (150) may be fitted and coupled to the support pillar (117).

Referring to Figure 9, the upper cover (140) may be coupled to the cell frame (110) to cover the open top of the cell frame (110), as it is fitted and coupled to the top of the support pillar (117). In addition, the lower cover (150) may be coupled to the cell frame (110) to cover the open bottom of the cell frame (110), as it is fitted and coupled to the bottom of the support pillar (117).

Hereinafter, the manufacturing method of the battery module configured as above will be described.

Referring to Figures 4 and 5, a cell frame (110) provided with a cell insertion space (111) and a support rib (114) is prepared.

Referring to Figure 6, each battery cell (120) is inserted into the cell insertion space (111) by passing through each rib hole (116).

Referring to Figure 7, when a plurality of battery cells (120) is inserted into the cell insertion space (111), a flame-retardant material is injected into the cell insertion space (111). As described above, a potting resin, in which silicone and a flame retardant are mixed, may be used as the flame-retardant material. In addition, the potting resin is one of a silicone-based resin, a urethane-based resin, or an epoxy-based resin.

Referring to Figure 8, while the filled flame-retardant material is cured, a firewall part (130) surrounding the inner surface of the cell insertion space (111) and the outer peripheral surface of each battery cell (120) is formed.

The firewall part (130) is in contact with the inner surface of the cell insertion space (111) and the outer peripheral surface of each battery cell (120), respectively, and surrounds each battery cell (120) in the cell insertion space (111), and the firewall part (1130) forms firewalls in which adjacent battery cells (120) divide each other.

Referring to Figure 9, the upper cover (140) is fitted and coupled to the top of the support pillar (117) to cover the open top of the cell frame (110), and the lower cover (150) is fitted and coupled to the bottom of the support pillar (117) to cover the open bottom of the cell frame (110).

Also, as the cell frame (110) is manufactured as a one-piece, there is no joint site of the cell frame (110), and there is no gap (G, see Figure 1) due to the joint site.

In addition, the firewall (130) is filled in the entire region of the cell insertion space (111) and cured, and thus is provided to surround each battery cell (120), thereby blocking the flame of the ignited battery cell from transferring to surrounding battery cells, whereby it is possible to prevent chain ignition of battery cells.

## Claims

1. A battery module (100) comprising:
a plurality of battery cells (120);
a cell frame (110) provided with a cell insertion space (111) into which the respective battery cells (120) are inserted, and a support rib (114) dividing the cell insertion space (111) and supporting the respective battery cells (120); and
a firewall part (130) provided in the cell insertion space (111) and provided to surround the respective battery cells (120),
**characterized in that** the cell frame (110) is provided so that its thickness becomes thicker at least in part toward the central portion (110a) of the cell frame (110) along the insertion direction (F1) of the battery cell (120), such that the thickness of the cell frame (110) becomes thicker as it goes from the upper end (110b) of the cell frame (110) to the central portion (110a) of the cell frame (110), and is provided so that its thickness becomes narrower as it goes from the central portion (110a) to the lower end (110c) of the cell frame (110), along the insertion direction (F1) of the battery cell (120).

2. The battery module (100) according to claim 1, wherein
in the cell frame (110), the cell insertion space (111) is divided up and down by the support rib (114), and the upper space (111a) of the cell insertion space (111), which is the top of the support rib (114), and the lower space (111b) of the cell insertion space (111), which is the bottom of the support rib (114), are connected to each other to enable fluid movement.

3. The battery module (100) according to claim 1, wherein
the cell frame (110) has a shape that the upper space (111a) and the lower space (111b) are symmetrical to each other based on the support rib (114).

4. The battery module (100) according to claim 1, wherein
the firewall part (130) comprises a potting resin, in which it is injected into the cell insertion space (111) and cured to be in a state of surrounding the respective battery cells (120).

5. The battery module (100) according to claim 4, wherein
the potting resin is injected into the entire region of the cell insertion space (111).

6. The battery module (100) according to claim 5, wherein
the potting resin comprises any one of a silicone-based resin, a urethane-based resin, or an epoxy-based resin.

7. The battery module (100) according to claim 1, wherein
the firewall part (130) contacts the inner surface of the cell insertion space (111) and the outer peripheral surface of each battery cell (120), respectively, and is disposed to divide adjacent battery cells (120).

8. The battery module (100) according to claim 7, wherein
the firewall part (130) is provided so that the width between the inner surface of the cell frame (110) and the battery cell (120) closest to the cell frame (110) becomes narrower as it goes from the upper end of the firewall part (130) to the central portion (110a) along the insertion direction (F1) of the battery cell (120), and is provided so that it becomes wider as it goes from the central portion of the firewall part (130) to the lower end of the firewall part (130).

9. The battery module (100) according to claim 1, wherein
the support rib (114) has a plurality of rib holes (116) into which the respective battery cells (120) are inserted.

10. The battery module (100) according to claim 9, wherein
the support rib (114) is formed integrally with the cell frame (110).

11. The battery module (100) according to claim 9, wherein
the support rib (114) is disposed to be spaced apart along the peripheries of the rib holes (116), and comprises a plurality of support protrusions (115) provided to support the side surfaces of the battery cells (120) inserted into the rib holes (116).

12. The battery module (100) according to claim 11, wherein
the support protrusion (115) is formed to protrude from at least one of the top or the bottom of the support rib (114).

13. The battery module (100) according to claim 1, further comprising
a support pillar (117) passing through the support rib (114) up and down, disposed in parallel with the battery cell (120), and coupled to the support rib (114).

14. The battery module (100) according to claim 13, further comprising:
an upper cover (140) mounted on the top of the support pillar (117) and coupled to the cell frame (110) to cover the open top of the cell frame (110); and
a lower cover (150) mounted on the bottom of the support pillar (117) and coupled to the cell frame (110) to cover the open bottom of the cell frame (110).

## Patentansprüche

1. Batteriemodul (100), umfassend:
eine Mehrzahl von Batteriezellen (120);
einen Zellenrahmen (110), welcher mit einem Zellen-Einsatzraum (111) bereitgestellt ist, in welchen entsprechende Batteriezellen (120) eingesetzt sind, sowie einer Tragerippe (114) welche den Zellen-Einsatzraum (111) unterteilt und die entsprechenden Batteriezellen (120) trägt; und
einen Brandwand-Teil (130), welcher in dem Zellen-Einsatzraum (111) bereitgestellt und dazu bereitgestellt ist, die entsprechenden Batteriezellen (120) zu umgeben,
**dadurch gekennzeichnet, dass** der Zellenrahmen (110) derart bereitgestellt ist, dass seine Dicke wenigstens teilweise in Richtung des zentralen Abschnitts (110a) des Zellenrahmens (110) entlang der Einsetzrichtung (F1) der Batteriezelle (120) dicker wird, so dass die Dicke des Zellenrahmens (110) dicker wird, verlaufend von dem oberen Ende (110b) des Zellenrahmens (110) zu dem zentralen Abschnitt (110a) des Zellenrahmens (110) und derart bereitgestellt ist, dass seine Dicke schmaler wird, verlaufend von dem zentralen Abschnitt (110a) zu dem unteren Ende (110c) des Zellenrahmens (110) entlang der Einsetzrichtung (F1) der Batteriezelle (120).

2. Batteriezelle (110) nach Anspruch 1, wobei
in dem Zellenrahmen (110) der Zellen-Einsatzraum (111) nach oben und unten durch die Tragerippe (114) unterteilt ist und der obere Raum (111a) des Zellen-Einsatzraums (111), welcher die Oberseite der Tragerippe (114) ist, und der untere Raum (111b) des Zellen-Einsatzraums (111), welcher die Unterseite der Tragerippe (114) ist, miteinander verbunden sind, um eine Fluidbewegung zu ermöglichen.

3. Batteriemodul (100) nach Anspruch 1, wobei
der Zellenrahmen (110) eine Form aufweist, dass der obere Raum (111a) und der untere Raum (111b) symmetrisch zueinander auf Grundlage der Tragerippe (114) sind.

4. Batteriemodul (100) nach Anspruch 1, wobei
der Brandwand-Teil (130) ein Vergussharz umfasst, wobei es in den Zellen-Einsatzraum (111) injiziert und in einem Zustand ausgehärtet ist, in welchem es die entsprechenden Batteriezellen (120) umgibt.

5. Batteriemodul (100) nach Anspruch 4, wobei
das Vergussharz in den gesamten Bereich des Zellen-Einsatzraums (111) injiziert ist.

6. Batteriemodul (100) nach Anspruch 5, wobei
das Vergussharz ein beliebiges aus einem Silikon-basierten Harz, einem Urethanbasierten Harz oder einem Epoxid-basierten Harz umfasst.

7. Batteriemodul (100) nach Anspruch 1, wobei
der Brandwand-Teil (130) jeweils die innere Fläche des Zellen-Einsatzraums (111) und die äußere Umfangsfläche von jeder Batteriezelle (120) kontaktiert und dazu angeordnet ist, benachbarte Batteriezellen (120) zu unterteilen.

8. Batteriemodul (100) nach Anspruch 7, wobei
der Brandwand-Teil (130) derart bereitgestellt ist, dass die Breite zwischen der inneren Fläche des Zellenrahmens (110) und der Batteriezelle (120) am nächsten zu dem Zellenrahmen (110) schmaler wird, verlaufend von dem oberen Ende des Brandwand-Teils (130) zu dem zentralen Abschnitt (110a) entlang der Einsetzrichtung (F1) der Batteriezelle (120), und derart bereitgestellt ist, dass er breiter wird, verlaufend von dem zentralen Abschnitt des Brandwand-Teils (130) zu dem unteren Ende des Brandwand-Teils (130).

9. Batteriemodul (100) nach Anspruch 1, wobei
die Tragerippe (114) eine Mehrzahl von Rippenlöchern (116) aufweist, in welche entsprechende Batteriezellen (120) eingesetzt sind.

10. Batteriemodul (100) nach Anspruch 9, wobei
die Tragerippe (114) integral mit dem Zellenrahmen (110) gebildet ist.

11. Batteriemodul (100) nach Anspruch 9, wobei
die Tragerippe (114) dazu angeordnet ist, entlang der Umfänge der Rippenlöcher (116) beabstandet zu sein, und eine Mehrzahl von Tragevorsprüngen (115) umfasst, welche dazu bereitgestellt sind, die Seitenflächen der Batteriezellen (120) zu tragen, welche in die Rippenlöcher (116) eingesetzt sind.

12. Batteriemodul (100) nach Anspruch 11, wobei
der Tragevorsprung (115) dazu gebildet ist, von wenigstens einem aus der Oberseite oder der Unterseite der Tragerippe (114) vorzustehen.

13. Batteriemodul (100) nach Anspruch 1, ferner umfassend
eine Tragesäule (117), welche durch die Tragerippe (114) oben und unten hindurchtritt, angeordnet parallel zu der Batteriezelle (120) und gekoppelt mit der Tragerippe (114).

14. Batteriemodul (100) nach Anspruch 13, ferner umfassend:
eine obere Abdeckung (140), welche an der Oberseite der Tragesäule (117) montiert und mit dem Zellenrahmen (110) gekoppelt ist, um die offene Oberseite des Zellenrahmens (110) zu bedecken; und
eine untere Abdeckung (150), welche an der Unterseite der Tragesäule (117) montiert und mit dem Zellenrahmen (110) gekoppelt ist, um die offene Unterseite des Zellenrahmens (110) zu bedecken.

## Revendications

1. Module de batterie (100) comprenant :
une pluralité d'éléments de batterie (120) ;
un cadre (110) d'éléments doté d'un espace (111) d'insertion d'éléments dans lequel les éléments de batterie (120) respectifs sont insérés, et une nervure de support (114) divisant l'espace (111) d'insertion d'éléments et supportant les éléments de batterie (120) respectifs ; et
une partie pare-feu (130) disposée dans l'espace (111) d'insertion d'éléments et destinée à entourer les éléments de batterie (120) respectifs,
**caractérisé en ce que** le cadre (110) d'éléments est conçu de sorte que son épaisseur grossisse au moins en partie vers la portion centrale (110a) du cadre (110) d'éléments, le long de la direction d'insertion (F1) de l'élément de batterie (120), de sorte que l'épaisseur du cadre (110) d'éléments grossisse progressivement de l'extrémité supérieure (110b) du cadre (110) d'éléments à la portion centrale (110a) du cadre (110) d'éléments, et est conçu de sorte que son épaisseur s'amincisse progressivement de la portion centrale (110a) à l'extrémité inférieure (110c) du cadre (110) d'éléments, le long de la direction d'insertion (F1) de l'élément de batterie (120).

2. Module de batterie (100) selon la revendication 1, dans lequel
dans le cadre (110) d'éléments, l'espace (111) d'insertion d'éléments est divisé verticalement par la nervure de support (114), et l'espace supérieur (111a) de l'espace (111) d'insertion d'éléments, qui correspond au sommet de la nervure de support (114), et l'espace inférieur (111b) de l'espace (111) d'insertion d'éléments, qui correspond à la base de la nervure de support (114), sont reliés entre eux pour permettre un mouvement fluide.

3. Module de batterie (100) selon la revendication 1, dans lequel
le cadre (110) d'éléments présente une forme telle que l'espace supérieur (111a) et l'espace inférieur (111b) sont symétriques l'un par rapport à l'autre par rapport à la nervure de support (114).

4. Module de batterie (100) selon la revendication 1, dans lequel
la partie pare-feu (130) comprend une résine d'enrobage, qui est injectée dans l'espace (111) d'insertion d'éléments et durcie pour entourer les éléments de batterie (120) respectifs.

5. Module de batterie (100) selon la revendication 4, dans lequel :
la résine d'enrobage est injectée dans toute la région de l'espace (111) d'insertion d'éléments.

6. Module de batterie (100) selon la revendication 5, dans lequel
la résine d'enrobage comprend l'une quelconque d'une résine à base de silicone, d'une résine à base d'uréthane ou d'une résine à base d'époxy.

7. Module de batterie (100) selon la revendication 1, dans lequel
la partie pare-feu (130) est en contact avec la surface intérieure de l'espace (111) d'insertion d'éléments et la surface périphérique extérieure de chaque élément de batterie (120), respectivement, et est disposée pour diviser des éléments de batterie (120) adjacents.

8. Module de batterie (100) selon la revendication 7, dans lequel
la partie pare-feu (130) est conçue de sorte que la largeur entre la surface intérieure du cadre (110) d'éléments et l'élément de batterie (120) le plus proche du cadre (110) d'éléments rétrécisse progressivement de l'extrémité supérieure de la partie pare-feu (130) à la portion centrale (110a) le long de la direction d'insertion (F1) de l'élément de batterie (120), et est conçue de sorte qu'elle s'élargisse progressivement de la portion centrale de la partie pare-feu (130) à l'extrémité inférieure de la partie pare-feu (130).

9. Module de batterie (100) selon la revendication 1, dans lequel
la nervure de support (114) présente une pluralité de trous (116) de nervure dans lesquels sont insérés les éléments de batterie (120) respectifs.

10. Module de batterie (100) selon la revendication 9, dans lequel
la nervure de support (114) fait partie intégrante du cadre (110) d'éléments.

11. Module de batterie (100) selon la revendication 9, dans lequel
la nervure de support (114) est disposée de manière à être espacée selon les périphéries des trous (116) de nervure et comprend une pluralité de saillies de support (115) destinées à supporter les surfaces latérales des cellules de batterie (120) insérées dans les trous (116) de nervure.

12. Module de batterie (100) selon la revendication 11, dans lequel
la saillie de support (115) est formée pour dépasser d'au moins l'un du sommet ou de la base de la nervure de support (114).

13. Module de batterie (100) selon la revendication 1, comprenant en outre
un pilier de support (117) traversant la nervure de support (114) de haut en bas, disposé parallèlement à l'élément de batterie (120) et couplé à la nervure de support (114).

14. Module de batterie (100) selon la revendication 13, comprenant en outre :
un couvercle supérieur (140) monté sur le sommet du pilier de support (117) et couplé au cadre (110) d'éléments pour recouvrir le dessus ouvert du cadre (110) d'éléments ; et
un couvercle inférieur (150) monté sur la base du pilier de support (117) et couplé au cadre (110) d'éléments pour couvrir le dessous ouvert du cadre (110) d'éléments.
